# EUROPEAN PATENT APPLICATION

(11) **EP 4 585 109 A1**
(43) Date of publication of application: **16.07.2025**
(21) Application number: 23896062.9
(22) Date of filing: 21.07.2023
(51) Int. Cl.: A47J 19/02

(54) **JUICER**

(30) Priority: 01.12.2022 CN 202223200602 U
(71) Applicant: Xu, Shi, Zhongshan, Guangdong 528400 (CN); Jiang, Jine, Zhongshan, Guangdong 528400 (CN)
(72) Inventor: Xu, Shi, Zhongshan, Guangdong 528400 (CN); Jiang, Jine, Zhongshan, Guangdong 528400 (CN)
(74) Representative: Chung, Hoi Kan
(86) International application number: PCT/CN2023/108511
(87) International publication number: WO 2024/113899

(57) **Abstract**

The present invention discloses a juicer, including: a main body, a material barrel, and a squeezing barrel, where the material barrel is in communication with the squeezing barrel, a cutting device is disposed in the material barrel, a screw rod is disposed in the squeezing barrel, a power unit is disposed on the main body, the power unit powers the cutting device and the screw rod, a first fitting portion is disposed below the cutting device, a second fitting portion is disposed on the main body, and the first fitting portion cooperates with the second fitting portion to enable the material barrel, the squeezing barrel, and a transmission mechanism to be separated from the main body in a first direction as a whole. The juicer of the present invention achieves integral assembly and disassembly of the squeezing barrel, the material barrel, and the transmission mechanism through cooperation between the first fitting portion and the second fitting portion, which facilitates cleaning and is convenient for disassembly.

## Description

### TECHNICAL FIELD

The present invention relates to the technical field of juicing apparatuses, and in particular, to a juicer.

### BACKGROUND

Juicers can process vegetables, fruits, and other ingredients into delicious beverages and have always been popular among people. With the improvement of people's living standards, juicers have moved from beverage shops into kitchens in countless households, becoming essential tools for improving people's lifestyles.

Users usually need to assemble the juicers before use and disassemble the juicers after use for easy cleaning and other operations. Since the existing double-squeezing juicer has two moving components, this design is relatively complicated in terms of disassembly and assembly and is very inconvenient to clean. How to reduce the complexity of disassembling and assembling the machine by an operator has always been a problem that R&D personnel in this industry have been thinking about.

### SUMMARY

A purpose of the present invention is to provide a juicer to solve a technical problem of complicated disassembly and assembly of the juicer.

To implement the above purpose, a technical solution adopted by the present invention is as follows: provided is a juicer, including: a main body, a material barrel, and a squeezing barrel, where the material barrel is in communication with the squeezing barrel, a cutting device is disposed in the material barrel, a screw rod is disposed in the squeezing barrel, a power unit is disposed on the main body, the power unit powers the cutting device and the screw rod, a transmission mechanism is disposed below the cutting device, the transmission mechanism is configured to connect the cutting device to the screw rod in a transmission manner, a first fitting portion is disposed below the material barrel, a second fitting portion is disposed on the main body, and the first fitting portion cooperates with the second fitting portion to enable the material barrel, the squeezing barrel, and the transmission mechanism to be separated from the main body in a first direction as a whole.

According to the juicer of the present invention, the main body and a whole formed by the squeezing barrel, the material barrel, and the transmission mechanism are disassembled and assembled together through the first fitting portion and the second fitting portion. In this way, two power components only need one power transmission unit provided by the main body to be operated. In addition, the squeezing barrel, the material barrel, the transmission mechanism, and the like are cleanable units, and the main body is a non-cleanable unit. In this assembly manner, the cleanable units can be disassembled and washed simply and conveniently and assembled conveniently. The cleanable units are disassembled towards one direction to be disassembled as a whole, and disassembly, assembly, and washing may be implemented without separately disassembling the screw rod and the cutting device, thereby greatly simplifying operation steps of an operator.

Preferably, an included angle between a central axis of the cutting device and a central axis of the screw rod is greater than 0 degrees and less than or equal to 90 degrees. That is, the central axes of the cutting device and the screw rod are not in the same direction, which facilitates communication of the two barrels and full utilization of space.

Preferably, the transmission mechanism includes a first bevel gear and a second bevel gear, and the first bevel gear is engaged with the second bevel gear. Through cooperation between the first bevel gear and the second bevel gear, power is transmitted between the screw rod and the cutting device. In addition, a transmission ratio is convenient to adjust, and a cleaning operation is not affected.

Preferably, the transmission mechanism includes a gear and a spiral rod, and the gear is engaged with the spiral rod. The spiral rod cooperates with the gear to provide sufficient power for a component connected to the gear. In addition, the transmission mechanism is simple, facilitating the cleaning operation.

Preferably, the first direction is a lateral direction of the main body. Disassembling from the lateral direction can enable the squeezing barrel and the material barrel to directly separate from the main body from a side surface and can also prevent remaining juice from polluting the main body.

Preferably, the first direction is a vertical upward direction of the main body. The squeezing barrel and the material barrel are separated from the main body from above, so that the squeezing barrel and the material barrel can be mounted more stably and do not move as the juicer operates.

Preferably, a first locking mechanism is disposed on the main body, a second locking mechanism is disposed on the material barrel, and the first locking mechanism cooperates with the second locking mechanism to fix the main body and the material barrel. The first locking mechanism and the second locking mechanism can enable the squeezing barrel and the material barrel to be firmly fixed, prevent the squeezing barrel and the material barrel from being easily separated to cause a fault, and ensure that the squeezing barrel and the material barrel are assembled in place.

Preferably, a first transmission shaft is disposed on the screw rod, and the first transmission shaft is connected to the power unit, to power the screw rod and the cutting device. The screw rod and the cutting device are connected to the power unit through one first transmission shaft, so that it can be ensured that the squeezing barrel, the material barrel, the transmission mechanism, the screw rod, and the cutting device may be disassembled as a whole by disassembling toward one direction only, and the screw rod or the cutting device does not need to be separately disassembled. In addition, the power unit directly powers the screw rod, which can also ensure a squeezing force of the screw rod, to ensure juice efficiency.

Preferably, a second transmission shaft is disposed on the cutting device, and the second transmission shaft is connected to the power unit, to power the screw rod and the cutting device. The screw rod and the cutting device are connected to the power unit through one second transmission shaft, so that it can be ensured that the squeezing barrel, the material barrel, the transmission mechanism, the screw rod, and the cutting device may be disassembled as a whole by disassembling toward one direction only, and the screw rod or the cutting device does not need to be separately disassembled. In addition, the power unit directly powers the cutting device, so that a cutting force can be ensured, thereby facilitating cutting of some difficult-to-cut materials.

Preferably, a tail end of the power unit is sealed. The power unit is sealed, so that remaining juice and cleaning water can be prevented from entering the power unit to damage the power unit. Meanwhile, the power unit only needs to be connected to one power component, so that a sealing structure is easy to implement, and a sealing effect is good.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and those of ordinary skill in the art may derive other drawings from these accompanying drawings without creative efforts.

In the accompanying drawings:
FIG. 1 is a schematic diagram of a sectional structure of a juicer 1000 according to Embodiment 1;
FIG. 2 is a schematic diagram of a sectional structure of a juicer 1000 in a split state according to Embodiment 1;
FIG. 3 is a schematic diagram of a partial structure of a juicer 1000 according to Embodiment 1;
FIG. 4 is a schematic diagram of a sectional structure of a juicer 2000 according to Embodiment 2;
FIG. 5 is a schematic diagram of a sectional structure of a juicer 2000 in a split state according to Embodiment 2;
FIG. 6 is a schematic diagram of a partial structure of a juicer 2000 according to Embodiment 2; and
FIG. 7 is a schematic diagram of a sectional structure of a juicer 3000 according to Embodiment 3.

### Reference numerals in the drawings:

1000, 2000, 3000 - juicer;
1100, 2100, 3100 - main body;
1110, 2110, 3110 - power unit;
1120, 2120, 3120 - second fitting portion;
1130, 2130 - first locking mechanism;
1200, 2200, 3200 - material barrel;
1210, 2210, 3210 - cutting device;
3211 - second transmission shaft;
1220, 2220, 3220 - first fitting portion;
1230, 2230 - second locking mechanism;
1300, 2300, 3300 - squeezing barrel;
1310, 2310, 3310 - screw rod;
1311, 2311 - first transmission shaft;
1400, 2400, 3400 - transmission mechanism;
1410 - first bevel gear; 2410 - gear;
1420 - second bevel gear; 2420 - spiral rod;
E - first direction.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by those of ordinary skill in the art based on the embodiments of the present invention without creative efforts shall fall within the protection scope of the present invention.

It should be noted that, when an element is described to be "fixed to" or "disposed on" another element, it may be directly positioned on another element or indirectly positioned on another element. When an element is described to be "connected to" another element, it may be directly connected to another element or indirectly connected to another element.

It should be noted that, the orientations or positional relationships indicated by the terms "length", "width", "up", "down", "front", "back", "left", "right", "vertical", "horizontal", "top", "bottom", "inside", "outside", and the like are based on those shown in the accompanying drawings, intended only for the convenience of describing the present invention and for simplifying the description, and not intended to indicate or imply that the referred apparatus or element must be provided with a particular orientation or constructed and operated with a particular orientation, therefore not allowed to be construed as a limitation of the present invention.

In addition, the terms "first" and "second" are merely intended for a purpose of description, and shall not be understood as an indication or implication of relative importance or an implicit indication of the number of the indicated technical features. Therefore, features defined by "first" and "second" may explicitly or implicitly include one or more of these features. In the description of the present invention, the meaning of "plurality" is at least two, unless otherwise specifically defined.

### Embodiment 1:

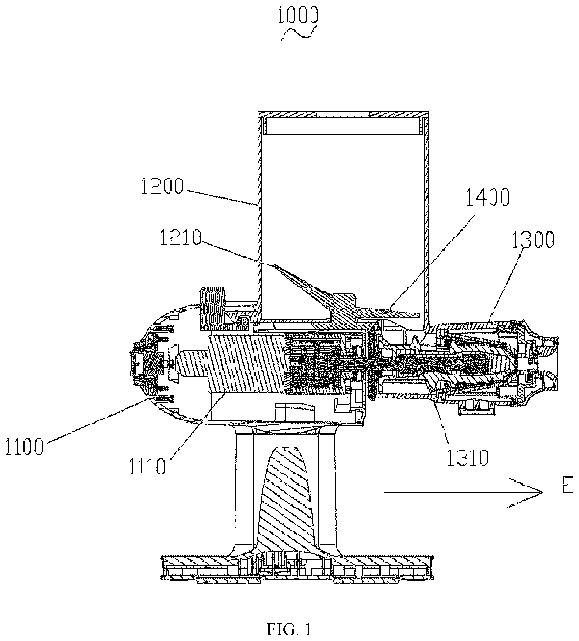

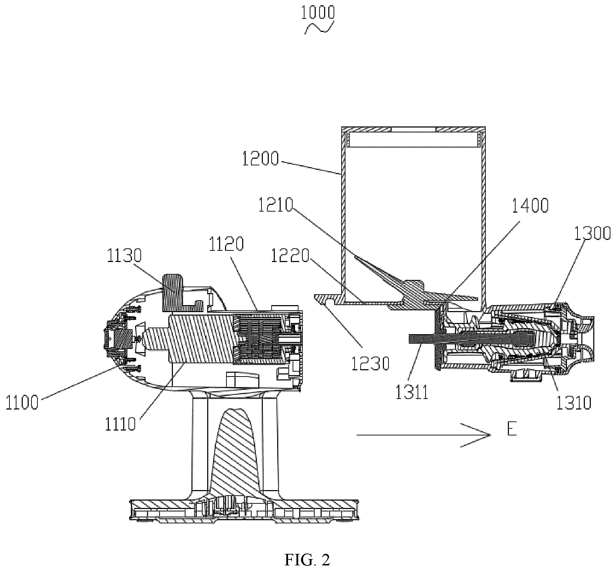

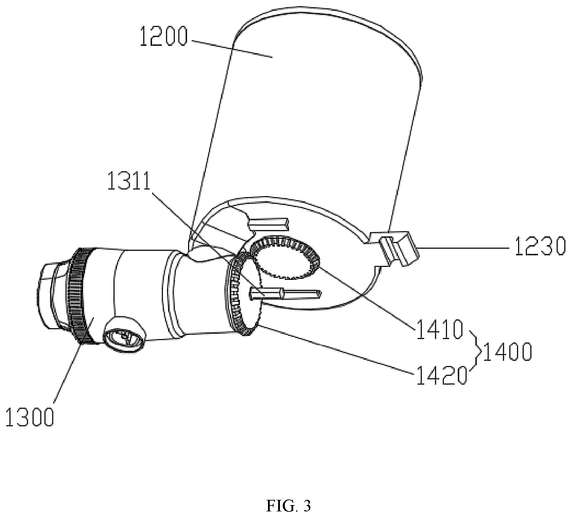

As shown in FIG. 1 to FIG. 3, FIG. 1 is a schematic diagram of a sectional structure of a juicer 1000 according to Embodiment 1 of the present invention, FIG. 2 is a schematic diagram of a sectional structure of a juicer 1000 in a split state according to Embodiment 1 of the present invention, and FIG. 3 is a schematic diagram of a partial structure of a juicer 1000 according to Embodiment 1 of the present invention.

This embodiment discloses a juicer 1000, including a main body 1100, a material barrel 1200, and a squeezing barrel 1300. A power unit 1110 is disposed on the main body 1100. A cutting device 1210 is disposed in the material barrel 1200, and a screw rod 1310 is disposed in the squeezing barrel 1300. The power unit 1110 powers the cutting device 1210 and the screw rod 1310. The material barrel 1200 is in communication with the squeezing barrel 1300.

Axes of the material barrel 1200 and the squeezing barrel 1300 are basically at an included angle of 90 degrees. A lower surface of the material barrel 1200 is a first fitting portion 1220, and a plane disposed on an upper portion of the main body 1100 is a second fitting portion 1120. The first fitting portion 1220 cooperates with the second fitting portion 1120, so that the material barrel 1200 and the squeezing barrel 1300 may be mounted on the main body 1100, or the material barrel 1200 and the squeezing barrel 1300 may be separated from the main body 1100 in a first direction E. The first direction E is towards an outer side of a side surface of the main body 1100. A first locking mechanism 1130 is disposed on the main body 1100, and a second locking mechanism 1230 is disposed on the material barrel 1200. The first locking mechanism 1130 cooperates with the second locking mechanism 1230, so that the material barrel 1200 and the squeezing barrel 1300 can be fixed to the main body, or the first locking mechanism is unlocked with the second locking mechanism, so that the material barrel and the squeezing barrel can be separated from the main body 1100.

A transmission mechanism 1400 is disposed below the cutting device 1210, and the transmission mechanism 1400 includes a first bevel gear 1410 and a second bevel gear 1420. The first bevel gear 1410 is connected to the cutting device 1210, and the second bevel gear 1420 is connected to the screw rod 1310. The first bevel gear 1410 is engaged with the second bevel gear 1420, to transmit power between the cutting device 1210 and the screw rod 1310.

A first transmission shaft 1311 is further disposed on the screw rod 1310, and the first transmission shaft 1311 may fit with the power unit 1110, to transmit power provided by the power unit 1110 to the screw rod 1310 and the second bevel gear 1420. The power unit 1110 only powers the sole first transmission shaft 1311. An axis of the first transmission shaft 1311 is parallel to the first direction E. A tail end of the power unit 1110 is a blind hole, and the tail end of the entire power unit 1110 is sealed, to prevent water, juice, or the like from entering the power unit 1110 along the first transmission shaft 1311 to damage the power unit 1110.

The juicer 1000 of this embodiment is provided with the first fitting portion 1220 and the second fitting portion 1120, so that the material barrel 1200, the squeezing barrel 1300, and the transmission mechanism 1400 may be separated from the main body 1100 in the first direction E without disassembling the screw rod 1310, the cutting device 1210, and other components, thereby reducing difficulty of disassembling the squeezing barrel 1300 and the material barrel 1200 and facilitating cleaning the squeezing barrel 1300 and the material 1200. In addition, the sole power shaft, the first transmission shaft 1311, is also in the first direction, facilitating direct disassembly. The transmission mechanism 1400 adopts the cooperation of the bevel gears, which is simple in structure and facilitates cleaning.

### Embodiment 2:

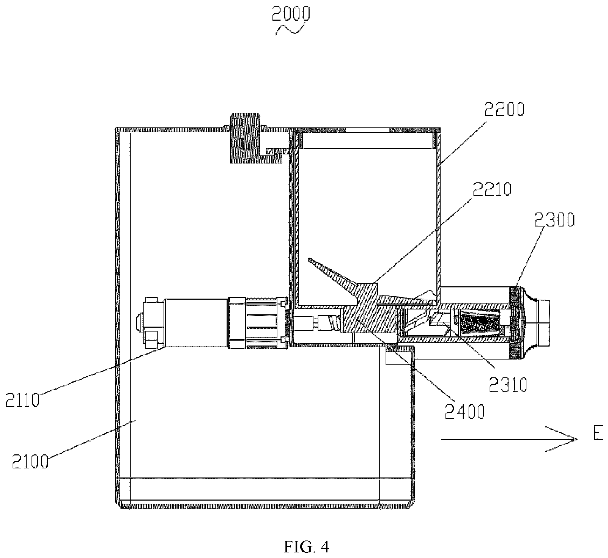

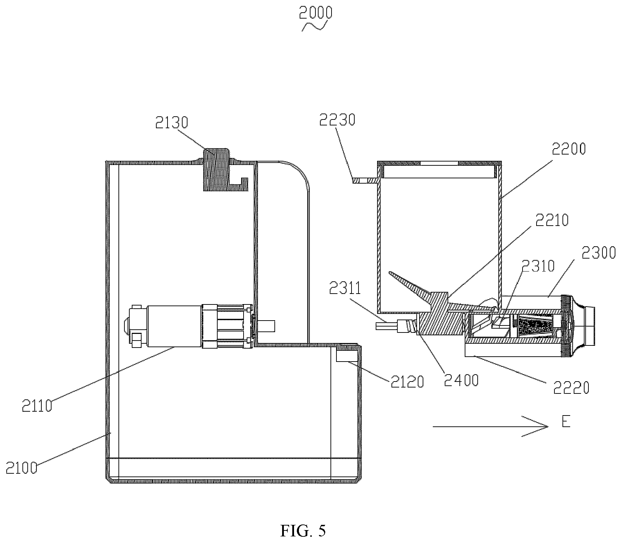

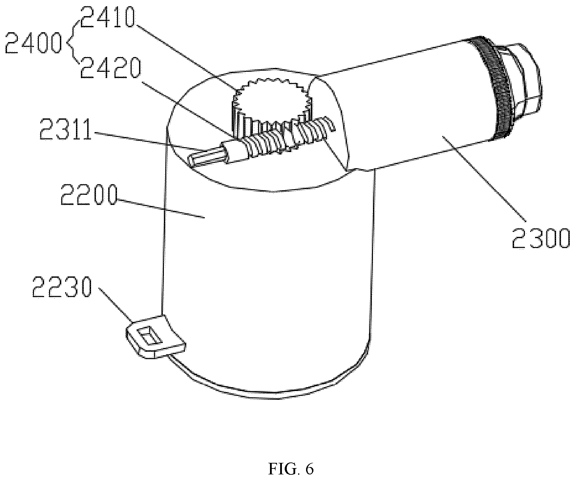

As shown in FIG. 4 to FIG. 6, FIG. 4 is a schematic diagram of a sectional structure of a juicer 2000 according to Embodiment 2 of the present invention, FIG. 5 is a schematic diagram of a sectional structure of a juicer 2000 in a split state according to Embodiment 2 of the present invention, and FIG. 6 is a schematic diagram of a partial structure of a juicer 2000 according to Embodiment 2 of the present invention.

This embodiment discloses a juicer 2000, including a main body 2100, a material barrel 2200, and a squeezing barrel 2300. A power unit 2110 is disposed on the main body 2100. A cutting device 2210 is disposed in the material barrel 2200, and a screw rod 2310 is disposed in the squeezing barrel 2300. The power unit 2110 powers the cutting device 2210 and the screw rod 2310. The material barrel 2200 is in communication with the squeezing barrel 2300.

Axes of the material barrel 2200 and the squeezing barrel 2300 are basically at an included angle of 90 degrees. A part of a lower surface, below the material barrel 2200 and located at the squeezing barrel 2300, is a first fitting portion 2220, and a surface disposed on an upper portion of a side surface of the main body 2100 is a second fitting portion 2120. The first fitting portion 2220 cooperates with the second fitting portion 2120, so that the material barrel 2200 and the squeezing barrel 2300 may be mounted on the main body 2100, or the material barrel 2200 and the squeezing barrel 2300 may be separated from the main body 2100 in a first direction E. The first direction E is towards an outer side of a side surface of the main body 2100. A first locking mechanism 2130 is disposed on the main body 2100, and a second locking mechanism 2230 is disposed on the material barrel 2200. The first locking mechanism 2130 cooperates with the second locking mechanism 2230, so that the material barrel 2200 and the squeezing barrel 2300 can be fixed to the main body, or the first locking mechanism is unlocked with the second locking mechanism, so that the material barrel and the squeezing barrel can be separated from the main body 2100.

A transmission mechanism 2400 is disposed below the cutting device 2210, and the transmission mechanism 2400 includes a gear 2410 and a spiral rod 2420. The gear 2410 is connected to the cutting device 2210, and the spiral rod 2420 is connected to the screw rod 2310. The gear 2410 is engaged with the spiral rod 2420, to transmit power between the cutting device 2210 and the screw rod 2310.

A first transmission shaft 2311 is further disposed on the screw rod 2310, and the first transmission shaft 2311 may fit with the power unit 2110, to transmit power provided by the power unit 2110 to the screw rod 2310 and the spiral rod 2420. The power unit 2110 only powers the sole first transmission shaft 2311. An axis of the first transmission shaft 2311 is parallel to the first direction E. A tail end of the power unit 2110 is a blind hole, and the tail end of the entire power unit 2110 is sealed, to prevent water, juice, or the like from entering the power unit 2110 along the first transmission shaft 2311 to affect a service life of the power unit 2110.

The juicer 2000 of this embodiment has basically the same effect as the juicer 1000 of Embodiment 1. In addition, the transmission mechanism 2400 of this embodiment utilizes the cooperation between the gear 2410 and the spiral rod 2420, so that the screw rod 2310 operates more stably without being affected by the cutting device 2210, and the cutting device 2210 can obtain high torque with a better cutting effect.

### Embodiment 3:

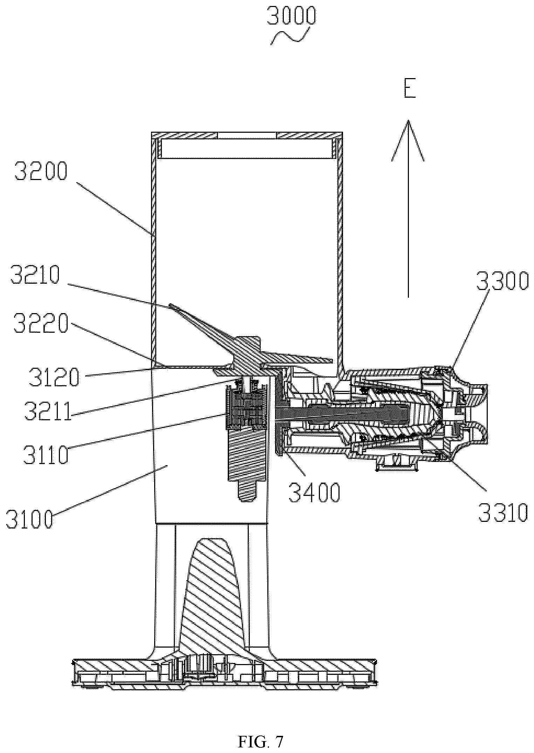

FIG. 7 is a schematic diagram of a sectional structure of a juicer 3000 according to Embodiment 3 of the present invention.

This embodiment discloses a juicer 3000, including a main body 3100, a material barrel 3200, and a squeezing barrel 3300. A power unit 3110 is disposed on the main body 3100. A cutting device 3210 is disposed in the material barrel 3200, and a screw rod 3310 is disposed in the squeezing barrel 3300. The power unit 3110 powers the cutting device 3210 and the screw rod 3310. The material barrel 3200 is in communication with the squeezing barrel 3300.

Axes of the material barrel 3200 and the squeezing barrel 3300 are basically at an included angle of 90 degrees. A part of a lower surface of the material barrel 3200 is a first fitting portion 3220, and a plane disposed on an upper portion of the main body 3100 is a second fitting portion 3120. The first fitting portion 3220 cooperates with the second fitting portion 3120, so that the material barrel 3200 and the squeezing barrel 3300 may be mounted on the main body 3100, or the material barrel 3200 and the squeezing barrel 3300 may be separated from the main body 3100 in a first direction E. The first direction E is a vertical upward direction.

A transmission mechanism 3400 is disposed below the cutting device 3210, and the transmission mechanism 3400 transmits power between the cutting device 3210 and the screw rod 3310.

A second transmission shaft 3211 is further disposed on the cutting device 3210, and the second transmission shaft 3211 may fit with the power unit 3110, to transmit power provided by the power unit 3110 to the cutting device 3210 and the transmission mechanism 3400. The power unit 3110 only powers the sole second transmission shaft 3211. An axis of the second transmission shaft 3211 is parallel to the first direction E. A tail end of the power unit 3110 is a blind hole, and the tail end of the entire power unit 3110 is sealed, to prevent water, juice, or the like from entering the power unit from the tail end of the power unit 3110 to affect a service life of the power unit 3110.

The juicer 3000 of this embodiment has basically the same effect as the juicer 1000 of Embodiment 1. In addition, the first direction E of this embodiment is the vertical upward direction. The material barrel 3200, the squeezing barrel 3300, and the transmission mechanism 3400 may be lifted upwards to be separated from the main body 3100, which facilitates disassembly and cleaning. The power unit 3110 directly powers the cutting device 3210, so that the cutting device 3210 has a stable power source, and a cutting effect is more stable.

What is disclosed above is merely preferred embodiments of the present invention, and certainly is not intended to limit the protection scope of the present invention. Therefore, any equivalent modifications made in accordance with the claims of the present invention shall fall within the scope of the present invention.

## Claims

1. A juicer, comprising: a main body, a material barrel, and a squeezing barrel, wherein the material barrel is in communication with the squeezing barrel, a cutting device is disposed in the material barrel, a screw rod is disposed in the squeezing barrel, a power unit is disposed on the main body, the power unit powers the cutting device and the screw rod, a transmission mechanism is disposed below the cutting device, the transmission mechanism is configured to connect the cutting device to the screw rod in a transmission manner, a first fitting portion is disposed below the material barrel, a second fitting portion is disposed on the main body, and the first fitting portion cooperates with the second fitting portion to enable the material barrel, the squeezing barrel, and the transmission mechanism to be separated from the main body in a first direction as a whole.

2. The juicer according to claim 1, wherein an included angle between a central axis of the cutting device and a central axis of the screw rod is greater than 0 degrees and less than or equal to 90 degrees.

3. The juicer according to claim 1, wherein the transmission mechanism comprises a first bevel gear and a second bevel gear, and the first bevel gear is engaged with the second bevel gear.

4. The juicer according to claim 1, wherein the transmission mechanism comprises a gear and a spiral rod, and the gear is engaged with the spiral rod.

5. The juicer according to claim 1, wherein the first direction is a lateral outward direction of the main body.

6. The juicer according to claim 1, wherein the first direction is a vertical upward direction of the main body.

7. The juicer according to claim 1, wherein a first locking mechanism is disposed on the main body, a second locking mechanism is disposed on the material barrel, and the first locking mechanism cooperates with the second locking mechanism to fix the main body and the material barrel.

8. The juicer according to claim 1, wherein a first transmission shaft is disposed on the screw rod, and the first transmission shaft is connected to the power unit, to power the screw rod and the cutting device.

9. The juicer according to claim 1, wherein a second transmission shaft is disposed on the cutting device, and the second transmission shaft is connected to the power unit, to power the screw rod and the cutting device.

10. The juicer according to claim 1, wherein a tail end of the power unit is sealed.
